# NEW EUROPEAN PATENT SPECIFICATION

(11) **EP 1 500 482 B2**
(45) Date of publication and mention of the opposition decision: **03.05.2017**
(45) Mention of the grant of the patent: 15.10.2008
(21) Application number: 03708616.2
(22) Date of filing: 14.03.2003
(51) Int. Cl.: B28B 11/02, B01D 39/20, B01D 39/14

(54) **METHOD OF MANUFACTURING HONEYCOMB STRUCTURAL BODY**
VERFAHREN ZUR HERSTELLUNG EINES WABENSTRUKTURKÖRPERS
PROCEDE DE FABRICATION D'UN CORPS STRUCTURAL A ALVEOLES

(30) Priority: 30.04.2002 JP 2002128145
(43) Date of publication of application: 26.01.2005
(73) Proprietor: NGK Insulators, Ltd., Nagoya-City, Aichi Pref. 467-8530 (JP)
(72) Inventor: FUJITA, Jun, c/o NGK INSULATORS, LTD., Nagoya-shi, Aichi 467-8530 (JP)
(74) Representative: Naylor, Matthew John
(86) International application number: PCT/JP2003/003081
(87) International publication number: WO 2003/092975

(56) References cited:
- JP-A- 1 192 504
- JP-A- 1 259 905
- JP-A- 2001 300 922
- US-A- 4 557 773
- US-A- 4 559 193
- US-A- 5 555 978
- US-A1- 2002 020 944
- Test Method JIS Z0237:2000
- Product Information Sheet - Scotch tm No. 810 Magic tm Tape
- 3M Technical Data Sheet - Scotch transparent polyester tape No. 9390
- 3M Technical Data Sheet - Scotch transparent polyester tape No. 9391
- Technical Data Sheet - Scotch® Transparent Film Tape 600
- Technical Data Sheet - Scotch® Transparent Film Tape 681
- Technical Data Sheet - Scotch® Transparent Film Tape 6811
- Technical Data Sheet - Scotch® Transparent Film Tape 605
- Declaration by Naoto Kouketsu, dated August 13, 2007

## Description

### Technical Field

The present invention relates to a method of manufacturing a plugged up honeycomb structure suitably usable for filters such as diesel particulate filters (hereinafter referred to as "DPF"), and particularly to a method for manufacturing a honeycomb structure according to which breakage of honeycomb formed body or honeycomb structure caused by plugging up can be inhibited.

### Background Art

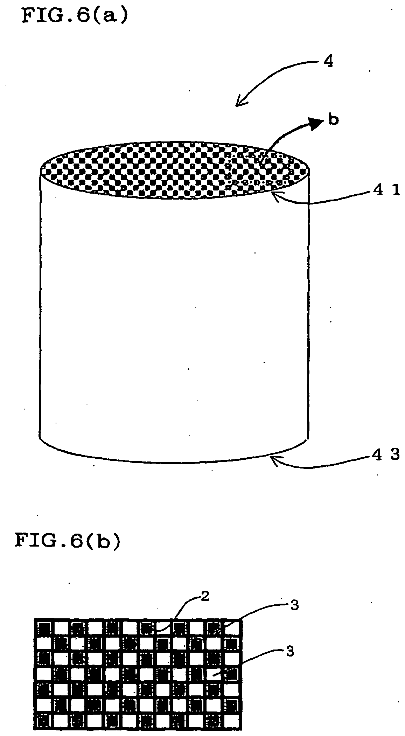

Honeycomb structures used as a filter for removing particulates in exhaust gases of internal combustion engines, boilers, etc., especially DPF, as shown in Fig. 6(a) and (b), generally have a structure comprising a plurality of cells 3 partitioned by partition walls 2 and passing from one end face 41 to another other end face 43 with the adjacent cells being plugged up at their end faces which are opposite to each other.

As a method of manufacturing such a honeycomb structure, the applicant has disclosed in JP-A-2001-300922 a method which comprises preparing a mask by boring holes through a sheet adhered to an end face of a honeycomb formed body at the positions corresponding to predetermined cells for every honeycomb formed body, dipping the face to which the mask has been adhered in a plugging slurry and filling the cells with the plugging slurry through the holes made in the mask. A similar method is also disclosed in JP-A-2002-37672. In Examples of this laid-open specification, it is described that holes were made in a film of 110 µm in total thickness at the predetermined positions using a CO₂ laser set at a beam diameter of 0.1 mmφ and an output of 3-5 W.

These methods are promising methods since automation is possible and the predetermined cells can be exactly plugged up. However, when a film is used, the film must be removed eventually, and in case the film is removed by peeling it, the surface portion of the formed body is also sometimes peeled off. Furthermore, the film may be removed by heating at a firing step, but in this case there is the possibility of breaking of the portion to which the film is adhered.

Further such methods are known from documents US-A-2002/0020944 and US-A-4 559 193. Document US-A-2002/0020944 discloses the preamble of apended claim 1.

### Disclosure of Invention

The present invention has been made in view of the above circumstances, and the object is to provide a method for producing a honeycomb structure according to which breakage of honeycomb formed body or honeycomb structure caused by plugging up can be inhibited and the cells can be easily and surely plugged up.

As a result of investigation conducted by the inventors on the film used for the above method, it has been found that slippage of the film does not occur during packing of a plugging material and breakage of the honeycomb formed body or honeycomb structure caused at the time of removing the film can be inhibited by using a film having an adhesive force within a specific range.

That is, the present invention is a method for producing a honeycomb structure including a step of plugging up a plurality of cells at any of end faces of honeycomb formed body having two end faces and a plurality of cells passing from one end face to another end face, whereby the step of plugging up the cells includes a first substep of adhering a film to any of the end faces, a second substep of boring holes through the film at specified positions corresponding to the cells to be plugged up by a high-density energy beam and a third substep of packing a plugging material in the cells to be plugged up, and the film used at the first substep comprises a substrate layer and an adhesive layer, **characterized in that** the film has an adhesive force of 3-15 N/25 mm.

In the present invention, it is preferred that the method includes a step of forming the honeycomb formed body and firing the formed body plugged at the plugging step, and the thickness of the film is preferably 10-70 µm and the thickness of the substrate layer is preferably 5-40 µm. Furthermore, it is preferred that the thickness of the adhesive layer is 5-40 µm and the substrate layer is mainly composed of a polyester or polyolefin. Further, the adhesive layer is preferably mainly composed of an acrylic adhesive material.

### Brief Description of Drawings

Fig. 1 is an oblique view which schematically shows a method of adhering the film at the plugging-up step in the present invention.
Fig. 2(a) is a partially enlarged plan view which schematically shows one example of a state of the film being adhered to the honeycomb formed body according to the present invention, and Fig. 2(b) is a sectional view taken on line B-B of Fig. 2(a).
Fig. 3 is a schematic sectional view which shows one example of a method of packing a plugging material in the specified cells at the plugging-up step according to the present invention.
Figs. 4 (a) and (b) are schematic sectional views which show movement of the film at the firing step according to the present invention.
Fig. 5 is a schematic sectional view which shows one example of a method of determining the hole boring positions at the plugging-up step according to the present invention.
Fig. 6(a) is an oblique view which schematically shows one example of the honeycomb structure which can be produced by the present invention and Fig. 6(b) is a partially enlarged view of the portion indicated by b in Fig. 6(a).

### Best Mode for Carrying Out the Invention

The method for producing a honeycomb structure according to the present invention will be explained below. The following embodiments do not limit the present invention in any manner.

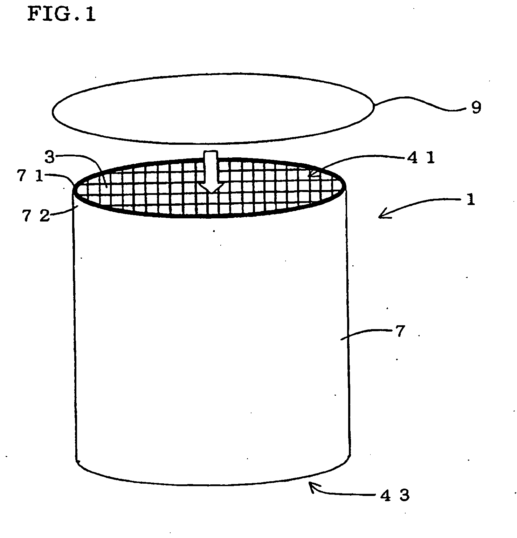

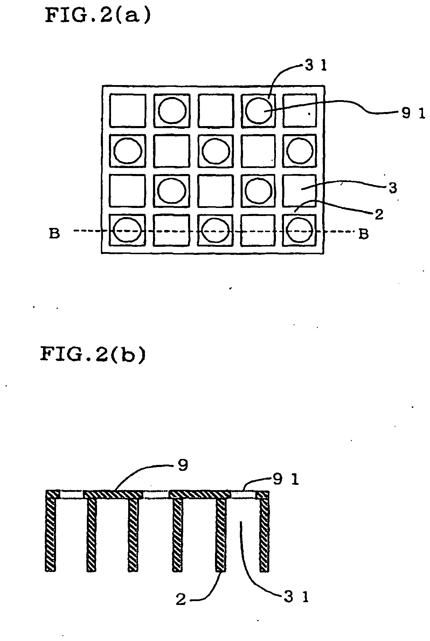

The plugging-up step in the method for producing honeycomb structure of the present invention includes a first substep of adhering a film 9 to either one of the end faces of a honeycomb structure 1, for example, an end face 41 as shown in Fig. 1, a second substep of boring holes through the film 9 at specified positions 91 corresponding to the cells 31 to be plugged up by a high-density energy beam as shown in Figs. 2(a) and (b), and a third substep of packing a plugging material 15 in the cells 31 to be plugged up.

The important feature of the present invention is that the film used at the first substep comprises a substrate layer and an adhesive layer and the adhesive force of the film is within the range of 3-15 N/25 mm. As mentioned above, the film must be finally removed, and as the method of removing the film, there are (1) a method of peeling off the film from the honeycomb formed body after the plugging-up step and (2) a method of decomposing and/or burning the film at the firing step of honeycomb formed body which is generally carried out. In the case of (1) removing the film by peeling off it, if the adhesive force of the film is too strong, a part of the formed body is peeled off together with the film, which may cause breakage of the formed body, and on the other hand, if the adhesive force of the film is too low, slippage or separation of the film is apt to occur at the third substep of packing the plugging material, and the cells cannot be sometimes surely plugged up. Therefore, a honeycomb structure can be produced without causing breakage of the honeycomb formed body at the time of peeling of the film and slippage or separation of the film at the time of packing of the plugging material by using a film having an adhesive force of 3-15 N/25 mm, preferably 5-14 N/25 mm, more preferably 7-13 N/25 mm.

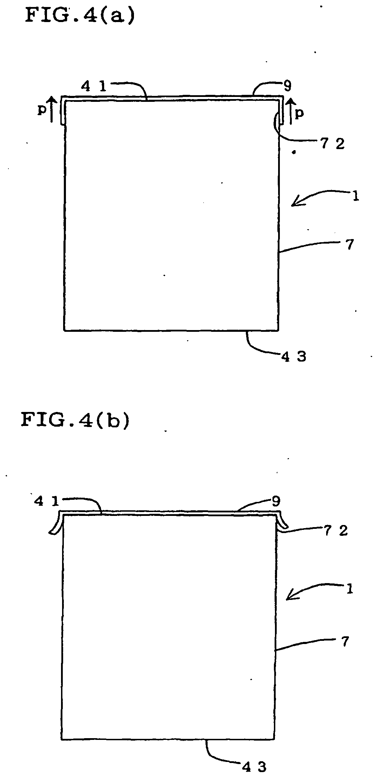

On the other hand, in the case of (2) removing the film by decomposing and/or burning it at the firing step, there is the possibility of breakage of the portion of the honeycomb structure after firing to which the film has been adhered. As a result of detailed investigation of this phenomenon, it has been found that the film is going to shrink when the film is heated at the firing step, which may cause the breakage. For example, when the film is going to shrink in the direction of the arrow p shown in Fig. 4(a), stress is generated due to the shrinking, and the film peels off as shown in Fig. 4(b). It has been found that at the time of the peeling of the film, the portion of the honeycomb structure to which the film is adhered, particularly, the portion of an outer peripheral wall 72 in the vicinity of the end face, is sometimes peeled off together with the film. It has been found that if the adhesive force of the film is too strong, the honeycomb formed body or honeycomb structure is broken during firing also in the case of removing the film by decomposing and/or burning it. If the adhesive force is too weak, the cells cannot sometimes be surely plugged up as in the case of the above method (1). Therefore, in the case of (2) removing the film at the firing step, a honeycomb structure can be produced without causing breakage of the honeycomb formed body at the time of peeling of the film and without causing slippage of the film at the time of packing of the plugging material by using a film having an adhesive force of 3-12 N/25 mm, preferably 5-11 N/25 mm, more preferably 7-10 N/25 mm. In the present invention, the adhesive force of the film means a value measured in accordance with JIS Z0237.

In the present invention, thickness of the film can be a factor which affects easiness in peeling off of the film. That is, if the film is too thick, it becomes too high in rigidity and can hardly be removed. On the other hand, if the film is too thin, it is insufficient in strength and can be removed with difficulty. Furthermore, the thickness of the film may also affect boring of the holes through the film and packing of the plugging material. That is, the film is too thick, satisfactory holes cannot be bored in the second substep of boring the holes at the specified positions of the film by a high-density energy beam, and thus exact plugging cannot sometimes be performed, which is not preferred. In this case, although satisfactory holes can be formed by increasing the output of the high-density energy beam or increasing the irradiation time, the increase of output of the high-density energy beam requires to use a large-sized high-density energy beam generation apparatus or causes increase of cost, and the increase of irradiation time leads to increase of production time, which are both undesirable. On the other hand, if the thickness of the film is too thin, a sufficient film strength cannot be obtained at the third substep of packing the plugging material, and hence the film may break to result in packing of the plugging material in the cells which are not to be plugged up. Therefore, from the various view points as mentioned above, the thickness of the film is preferably 10-70 µm, more preferably 15-60 µm, especially preferably 20-50 µm.

In the present invention, when the second substep of boring the holes through the film is carried out after the first substep of adhering the film to the end face of the honeycomb formed body, in order to make easy to determine the positions of boring the holes, the film is preferably transparent or translucent, namely, has such a transparency as being able to recognize the positions of the cells by an image recognition means such as photographing device, e.g., camera.

The thickness of substrate layer of the film can be a factor affecting rigidity and strength of the film and easiness in boring the holes by a high-density energy beam. Therefore, the thickness of the substrate layer is preferably 5-40 µm, more preferably 7-30 µm, especially preferably 10-25 µm.

The materials used for the substrate layer must be those which have a certain strength and which can be bored to form holes, and are preferably transparent or translucent. Therefore, the materials are preferably polymer materials, for example, polyesters such as homopolymers and copolymers of PET, polyolefins such as polyethylene and polypropylene, halogenated polyolefins such as polyvinyl chloride, and the like. The substrate layer is preferably mainly composed of the above polymer material, namely, 50% by mass of the substrate layer preferably comprises the polymer material. Among the polymer materials, polyesters and polyolefins are preferred, and polyesters are most preferred.

The materials used for the adhesive layer are not particularly limited provided that they have an adhesive force within the range of 3-15 N/25 mm, and adhesives containing acrylic materials or rubber materials are preferred, and acrylic adhesives containing acrylic materials are particularly preferred because they hardly remain in the honeycomb formed body at the time of removing the film.

Next, a series of the steps of the present invention will be explained. In the present invention, the steps preferably include a step of forming a honeycomb formed body. The forming step can be carried out, for example, in the following manner. As the raw material powders, there are used powders of various ceramics, for example, at least one material selected from the group consisting of cordierite, mullite, alumina, spinel, silicon carbide, silicon carbide-cordierite composite materials, silicon-silicon carbide composite materials, silicon nitride, lithium aluminum silicate, aluminum titanate, metals such as Fe-Cr-Al type metals, and combinations thereof. To the raw materials are added a binder such as methyl cellulose or hydroxypropoxylmethyl cellulose and in addition a surface active agent and water to prepare a plastic clay. This clay is subjected to extrusion to obtain a honeycomb formed body 1 having a plurality of cells 3 which pass from one end face 41 to another end face 43 as shown in Fig. 1.

The first substep in the plugging-up step of the present invention, namely, the step of adhering a film to either of the end faces, can be performed, for example, by adhering the film 9 to the end face 41 as shown in Fig. 1. In this case, the film 9 may be adhered to only the end face 41, but is preferably adhered so that it covers an outer peripheral wall 72 in the vicinity of the end face. This is because when the adhering portion between the film and the honeycomb formed body at the outermost periphery of the honeycomb formed body includes not only the end part 71 of the outer peripheral wall 7, but also the outer peripheral wall 72 in the vicinity of the end face shown in Fig. 1, this is effective to inhibit slippage or separation of the film at and near the outermost periphery during packing the plugging material at the subsequent step.

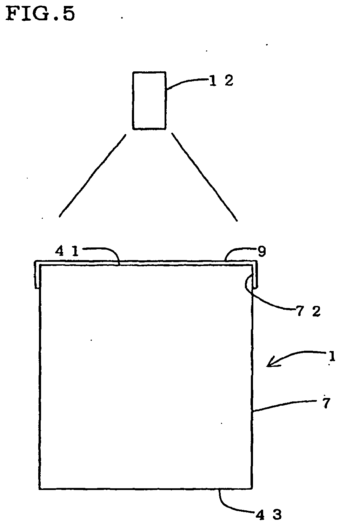

The second substep, namely, the step of boring holes by a high-density energy beam at the specified positions of the film corresponding to the cells which are to be plugged up, can be carried out in the following manner. For example, as shown in Fig. 5, the end face 41 to which the film 9 is adhered at the first substep is photographed by a photographing means such as camera 12 and the photographed images are subjected to image processing, thereby to determine the positions on the film which are above the cells to be plugged up, and the determined positions on the film are irradiated with a high-density energy beam by a high-density energy beam generation device based on the data of the determined positions to form holes through the film. The high-density energy beams include, for example, laser beams and the like. The laser beam generation devices in the case of using laser beams are not particularly limited, and preferred are, for example, generation devices such as CO₂ laser and YAG laser. The output is preferably about 5-15 W. The shape of the holes of the film does not need to be the same as the sectional shape of the cells and is not particularly limited. For example, the sectional shape of the cells may be tetragon and the shape of the holes may be circle, but if the size of the holes is too small with respect to the section of the cells, sufficient plugging up cannot be performed at the subsequent step. Therefore, it is preferred to form holes so as to share an area of 50% or more of the sectional area of the cells in total.

The second substep can also be carried out by boring the holes through the film before the first substep, namely, before adhering the film to the end face of the honeycomb formed body. In this case, for example, the end face of the honeycomb formed body is photographed by a photographing means such as camera, holes are bored at the specified positions of the film by a high-density energy beam based on the positional data obtained by image processing, and then this film can be adhered to the honeycomb formed body based on the positional data. That is, it is also possible to carry out first the second substep and thereafter carry out the first substep.

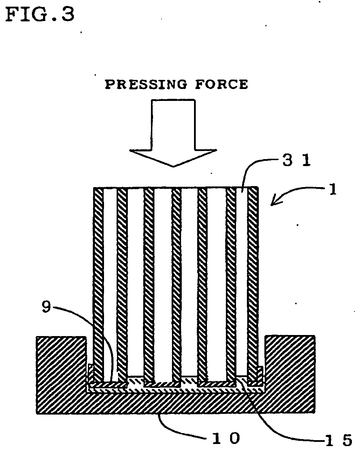

The third substep can be carried out, for example, in the following manner. As the plugging material, there can be prepared a slurry mainly composed of, for example, at least one material selected from ceramics and the like enu-. merated above as preferred raw materials of the honeycomb formed body and additionally containing other components, for example, a binder, a liquid such as water or glycerin and optionally a surface active agent. This plugging material 15 is poured into a container 10 as shown in Fig. 3. Then, the end face of the honeycomb formed body 1 to which the film 9 has been adhered is dipped in the plugging material 15 in the container 10, and further is pressed from above, whereby the plugging material can be packed in the specified cells, namely, cells 31 positioned at the places of the film 9 where the holes are bored.

The plugging-up step can be performed in this way, and it is preferred to carry out the plugging-up step also for another end face. Further, the plugging-up step is preferably carried out in such a manner that the adjacent cells of the honeycomb formed body are plugged up at their opposite end faces so that the plugged cells and unplugged opening cells form a checkered pattern at both end faces.

In the present invention, it is preferred to include a firing step of firing the formed body of which cells are plugged up. In this firing step, a honeycomb structure can be obtained by firing the plugged formed body at a specified temperature and in a specified atmosphere depending on the raw material powder, for example, at 1800-2200°C in an inert atmosphere of Ar or the like when silicon carbide is used as the raw material powder, and at about 1400-1440°C when cordierite or a material convertible to cordierite is used as the raw material powder. This firing step may optionally include a degreasing substep of removing organic matters such as binder, and in this case, the organic matters can be removed by heating the honeycomb formed body, for example, at about 150-600°C. Moreover, it is preferred to dry the honeycomb formed body before the firing step.

In the present invention, the film used at the plugging step finally becomes useless and hence must be removed. The film can be removed, for example, by peeling off the film after the plugging step. In this case, it is preferred to peel off the film after drying the honeycomb formed body. Moreover, the film can also be removed by decomposing and/or burning the film at the above-mentioned firing step without particularly peeling off the film.

The present invention will be explained in detail by the following examples, which should not be construed as limiting the invention in any manner.

### Examples 1-3 and Comparative Example 1

As raw materials, 80 parts by mass of SiC powders and 20 parts by mass of metallic Si powders were mixed and thereto were added methyl cellulose, hydroxypropoxylmethyl cellulose, a surface active agent and water to prepare a plastic clay. This clay was subjected to extrusion to obtain a honeycomb formed body having a partition wall thickness of about 300 µm (12 mil), a cell density of about 46.5 cells/cm² (300 cells/square inch), a sectional shape of square having a side of 35 mm, and a length of 152 mm.

The resulting honeycomb formed body was dried with microwave and hot air, and a film comprising the material and having the thickness and adhesive force as shown in Table 1 was adhered to the end face of the honeycomb formed body. As shown in Fig. 6, this end face was photographed by camera 12 and the photographed image was subjected to an image processing to determine the positions of the film which were above the cells to be plugged up, followed by irradiating with CO₂ laser beams of an output of 10-12 W and a beam diameter of 180 µmφ to bore the holes through the film at the specified positions. The holes bored through the film were again photographed by a camera and the diameter of the holes was measured.

Next, 30 parts by mass of water and 10 parts by mass of an organic auxiliary agent were added to 80 parts by mass of silicon carbide (SiC) and 20 parts by mass of metallic silicon (100 parts by mass in total) to prepare a slurry as a plugging material. This plugging material was poured in a container having an opening of nearly the same size as of the outer shape of the honeycomb formed body as shown in Fig. 3, and the plugging material was leveled in the container. Then, the honeycomb formed body was disposed in the container so that the end face of the honeycomb formed body to which the film was adhered contacted with the plugging material, and the honeycomb formed body was pressed downwards from above to pack the plugging material in the specified cells. The honeycomb formed body was dried at 100°C, and thereafter the film was removed by peeling off it. The easiness in peeling off of the film and occurrence of breakage of the honeycomb formed body were observed and evaluated. The removal of the film was carried out in two manners of removing the film just after drying, namely, in the state of the honeycomb formed body being at nearly the drying temperature and of removing the film after being left to stand, namely, in the state of the honeycomb formed body being at room temperature. The results are shown in Table 1.

The samples of Examples 1 and 2 were further subjected to a test in which the film was removed at the firing step without peeling off the film after plugging the cells, and occurrence of breakage of the honeycomb formed body after firing was examined. The results are shown in Table 1.

### Comparative Example 2

Boring of holes by laser was carried out in the same manner as in Example 1, except that the film used had a total thickness of 185 µm and had a substrate layer having a thickness of 100 µm and comprising a polyester. The holes could not be bored.

**Table 1**

| | Example 1 | Example 2 | Example 3 | Comparative Example 1 |
|---|---|---|---|---|
| Total thickness of film (µm) | 30 | 50 | 70 | 80 |
| Thickness of substrate layer (µm) | 12 | 25 | 38 | 50 |
| Material of substrate layer | Polyester | Polyester | Polyester | Polyester |
| Material of adhesive layer | Acrylic | Acrylic | Acrylic | Acrylic |
| Adhesive force (N/25 mm) | 8.58 | 12.26 | 14.17 | 17.16 |
| Average hole diameter (mm) | 0.97 | 0.7 | 0.62 | 0.57 |
| Easiness in packing of plugging material | Very easy | Very easy | Easy | Not easy |
| Easiness in peeling of film (just after drying) | Very easy | Very easy | Easy | Not easy |
| Easiness in peeling of film (after leaving) | Easy | Easy | Not easy | Not easy |
| Occurrence of breakage of formed body after peeling off of film | Not occurred | Not occurred | Not occurred | Occurred |
| Occurrence of breakage in honeycomb structure when film was removed by firing | Not occurred | Occurred | - | - |

From Table 1, it can be seen that the samples of Examples 1-3 showed no breakage of the honeycomb formed body which may be caused by peeling off of the film. Furthermore, in the case of the samples of Examples 1 and 2, holes for satisfactorily packing the plugging material in the cells could be bored, and when the film was peeled off after leaving the honeycomb formed body, it could be satisfactorily peeled off. Moreover, in the case of the sample of Example 1, there occurred no breakage of the honeycomb structure also when the film was removed by firing, and good results were obtained. On the other hand, in the case of the sample of Comparative Example 1, since the adhesive force of the film was too strong, the honeycomb formed body was broken during peeling off the film. Further, since the thickness of the film was too thick, sufficient holes could not be bored through the film.

### Industrial Applicability

As explained above, the method for producing a honeycomb structure according to the present invention can satisfactorily produce a honeycomb structure the cells of which are plugged up with inhibiting the breakage of the honeycomb formed body or honeycomb structure which may be caused during carrying out the plugging step. Therefore, the method for producing the honeycomb structure according to the present invention can be suitably applied to the production of filters and the like.

## Claims

1. A method for producing a honeycomb structure including a step of plugging up a plurality of cells (3) at either of end faces (41, 43) of a honeycomb formed body (1) having two end faces and a plurality of cells passing from one end face to another end face, whereby the step of plugging up the cells includes a first substep of adhering a film (9) to either of the end faces, a second substep of boring holes through the film at specified positions (91) corresponding to the cells to be plugged up by a high-density energy beam and a third substep of packing a plugging material (15) in the cells to be plugged up, and the film used at the first substep comprises a substrate layer and an adhesive layer, **characterized in that** the film has an adhesive force of 3-15 N/25 mm.

2. A method for producing a honeycomb structure according to claim 1 which includes a forming step of forming the honeycomb formed body and a firing step of firing the formed body plugged at the plugging-up step.

3. A method for producing a honeycomb structure according to claim 1 or 2, wherein the thickness of the film is 10-70 µm.

4. A method for producing a honeycomb structure according to any one of claims 1-3, wherein the thickness of the substrate layer is 5-40 µm.

5. A method for producing a honeycomb structure according to any one of claims 1-4, wherein the thickness of the adhesive layer is 5-40 µm.

6. A method for producing a honeycomb structure according to any one of claims 1-5, wherein the substrate layer is mainly composed of a polyester or a polyolefin.

7. A method for producing a honeycomb structure according to any one of claims 1-6, wherein the adhesive layer is mainly composed of an acrylic adhesive material.

## Patentansprüche

1. Verfahren zur Herstellung einer Wabenstruktur, umfassend einen Schritt zum Verschließen einer Vielzahl an Zellen (3) an einer der Stirnflächen (41, 43) eines Wabenformkörpers (1), der zwei Stirnflächen und eine Vielzahl an Zellen aufweist, die sich von einer Stirnfläche zu einer anderen Stirnfläche hindurcherstrecken, wobei der Schritt zum Verschließen der Zellen einen ersten Teilschritt zum Anhaften eines Films (9) an eine der Stirnflächen, einen zweiten Teilschritt zum Bohren von Löchern durch den Film an den zu verschließenden Zellen entsprechenden festgelegten Positionen (91) mittels eines Energiestrahls mit hoher Dichte und einen dritten Teilschritt zum Verdichten eines Verschlussmaterials (15) in den zu verschließenden Zellen umfasst, und der im ersten Teilschritt verwendete Film eine Substratschicht und eine Haftschicht umfasst, **dadurch gekennzeichnet, dass** der Film eine Haftstärke von 3 bis 15 N/25 mm aufweist.

2. Verfahren zur Herstellung einer Wabenstruktur nach Anspruch 1, das einen Bildungsschritt zum Ausbilden des Wabenformkörpers und einen Brennschritt zum Brennen des im Verschließungsschritt verschlossenen Formkörpers umfasst.

3. Verfahren zur Herstellung einer Wabenstruktur nach Anspruch 1 oder 2, worin die Dicke des Films 10 bis 70 µm beträgt.

4. Verfahren zur Herstellung einer Wabenstruktur nach einem der Ansprüche 1 bis 3, worin die Dicke der Substratschicht 5 bis 40 µm beträgt.

5. Verfahren zur Herstellung einer Wabenstruktur nach einem der Ansprüche 1 bis 4, worin die Dicke der Haftschicht 5 bis 40 µm beträgt.

6. Verfahren zur Herstellung einer Wabenstruktur nach einem der Ansprüche 1 bis 5, worin die Substratschicht hauptsächlich aus einem Polyester oder einem Polyolefin besteht.

7. Verfahren zur Herstellung einer Wabenstruktur nach einem der Ansprüche 1 bis 6, worin die Haftschicht hauptsächlich aus einem Acrylhaftmaterial besteht.

## Revendications

1. Procédé pour fabriquer une structure en nid d'abeilles comprenant une étape consistant à boucher une pluralité de cellules (3) au niveau de l'une ou l'autre des faces d'extrémité (41, 43) d'un corps formé en nid d'abeilles (1) comportant deux faces d'extrémité et une pluralité de cellules passant d'une face d'extrémité à une autre face d'extrémité, moyennant quoi l'étape de bouchage des cellules comprend une première sous-étape consistant à coller un film (9) à l'une ou l'autre des faces d'extrémité, une deuxième sous-étape consistant à percer des trous à travers le film à des positions spécifiées (91) correspondant aux cellules à boucher par un faisceau d'énergie à haute densité et une troisième sous-étape consistant à introduire un matériau de bouchage (15) dans les cellules à boucher, et le film utilisé au cours de la première sous-étape comprend une couche de substrat et une couche adhésive, **caractérisé en ce que** le film a une force d'adhérence de 3 à 15 N/25 mm.

2. Procédé pour fabriquer une structure en nid d'abeilles selon la revendication 1 qui comprend une étape de formation consistant à former le corps formé en nid d'abeilles et une étape de chauffage consistant à chauffer le corps formé bouché à l'étape de bouchage.

3. Procédé pour fabriquer une structure en nid d'abeilles selon la revendication 1 ou 2, dans lequel l'épaisseur du film est de 10 à 70 µm.

4. Procédé pour fabriquer une structure en nid d'abeilles selon l'une quelconque des revendications 1 à 3, dans lequel l'épaisseur de la couche de substrat est de 5 à 40 µm.

5. Procédé pour fabriquer une structure en nid d'abeilles selon l'une quelconque des revendications 1 à 4, dans lequel l'épaisseur de la couche adhésive est de 5 à 40 µm.

6. Procédé pour fabriquer une structure en nid d'abeilles selon l'une quelconque des revendications 1 à 5, dans lequel la couche de substrat est principalement composée d'un polyester ou d'une polyoléfine.

7. Procédé pour fabriquer une structure en nid d'abeilles selon l'une quelconque des revendications 1 à 6, dans lequel la couche adhésive est principalement composée d'un matériau adhésif acrylique.
